# EUROPÄISCHE PATENTANMELDUNG

(11) **EP 0 841 233 A2**
(43) Veröffentlichungstag der Anmeldung: **13.05.1998**
(21) Anmeldenummer: 97119115.0
(22) Anmeldetag: 03.11.1997
(51) Int. Cl.: B61D 27/00, B60J 7/16

(54) **Schienenfahrzeug**

(30) Priorität: 07.11.1996 DE 19645857
(71) Anmelder: ABB Daimler-Benz Transportation (Technology) GmbH, 13627 Berlin (DE)
(72) Erfinder: Eisbrecher, Hans-Dieter, Dr., 34246 Vellmar (DE)
(74) Vertreter: Rupprecht, Klaus, Dipl.-Ing.

(57) **Zusammenfassung**

Die Erfindung betrifft ein Schienenfahrzeug, insbesondere zur Personenbeförderung, mit einem Wagenkasten mit einem Wagendach (12), welches Wagendach (12) eine Einrichtung (10, 30, 42, 44) zur Entlüftung des Innenraums des Wagenkastens, einen sogenannten Dachlüfter, aufweist, der von einem mit dem Wagenkasten verbundenen Luftkanal (14) und einer im Abstand hierzu angeordneten Abdeckung (18, 32) gebildet ist, wobei der Abstand zwischen dem Luftkanal (14) des Dachlüfters (10, 30, 42, 44) und der zugeordneten Abdeckung (18, 32) einstellbar ist und durch Änderung des Abstands der Abdeckung (18, 32) zum Luftkanal (14) der strömungsaktive Querschnitt für den Luftaustausch veränderlich einstellbar ist.

## Beschreibung

Die Erfindung betrifft ein Schienenfahrzeug, insbesondere zur Personenbeförderung, mit einem Wagenkasten mit einem Wagendach, welches Wagendach eine Einrichtung zur Entlüftung des Innenraums des Wagenkastens, einen sogenannten Dachlüfter, aufweist, der von einem mit dem Wagenkasten verbundenen Luftkanal und einer im Abstand hierzu angeordneten Abdeckung gebildet ist.

Bei Schienenfahrzeugen, insbesondere zur Personenbeförderung,die mit einer Belüftungs- oder Klimaanlage ausgerüstet sind, werden häufig im Dachbereich angeordnete Entlüftungseinrichtungen vorgesehen, durch welche der Luftaustausch des Innenraums des Wagenkastens des Fahrzeugs erfolgt. Zusätzlich können auch die konstruktions-, komponenten- und/oder fertigungsabhängigen Undichtigkeiten am Wagenkasten beziehungsweise an dessen Zugangsöffnungen, wie Einstiegstüren oder Faltenbälge an Fahrzeugübergängen für den Luftaustausch ausgenutzt werden. So ergeben sich bezüglich der Undichtigkeiten von Fahrzeug zu Fahrzeug unterschiedliche Lüftungsquerschnitte, durch welche der Luftaustausch stattfindet, die nicht immer zufriedenstellend beherrschbar sind.

Die hierzu serienmäßig zum Einsatz vorgesehenen, im Dachbereich angeordneten Dachlüfter besitzen einen definierten Querschnitt, durch welchen der gezielte Luftaustausch erfolgen kann. Der Hauptanteil des Luftaustausches findet demgemäß auch in den genannten Dachlüftern statt, während die übrigen erwähnten Undichtigkeiten nicht in die Auslegung der Lüftungseinrichtung eingehen.

Ein bislang nicht befriedigend gelöstes Problem resultiert nun daraus, daß einerseits die herkömmlich zum Einsatz gelangenden Dachlüfter, wie erwähnt, feste Luftaustauschquerschnitte aufweisen und daß andererseits der Luftaustauschbedarf als fahrzeugspezifische Kenngröße vom jeweiligen Fahrzeugtyp und der Ausführung der Belüftungs- oder Klimaanlage abhängt und im Regelfall nicht optimal von den herkömmlichen Dachlüfter abgedeckt wird.

Ausgehend von diesem Stand der Technik ist es Aufgabe der Erfindung, für ein Schienenfahrzeug der eingangs genannten Art eine Einrichtung zur Entlüftung des Innenraums des Wagenkastens anzugeben, welche einfach gestaltet und herstellbar ist und welche auf möglichst einfache Weise an den fahrzeugspezifischen Luftaustauschbedarf anpaßbar ist.

Diese Aufgabe wird erfindungsgemäß gelöst durch die kennzeichnenden Merkmale des Patentanspruchs 1. Weitere vorteilhafte Ausgestaltungen und Verbesserungen der Erfindung sind in den Unteransprüchen dargelegt und gekennzeichnet.

Entsprechend der Erfindung ist der Abstand zwischen dem Luftkanal des Dachlüfters und der zugeordneten Abdeckung einstellbar, so daß durch Änderung des Abstands der Abdeckung zum Luftkanal der strömungsaktive Querschnitt für den Luftaustausch veränderlich eingestellt und so dem spezifischen Luftaustauschbedarf des betreffenden Schienenfahrzeuges angepaßt werden kann.

Die Ermittlung des erforderlichen beziehungsweise optimalen Luftaustauschquerschnittes benötigt zahlreiche Messungen und Versuche, die längere Zeit beanspruchen, zum Beispiel wegen des hiermit verbundenen Austausches der eingebauten Dachlüfter gegen andere, das heißt gegen solche mit kleinerem oder größerem Luftaustauschquerschnitt.

Mit Hilfe der erfindungsgemäßen Lüftungseinrichtung ist es nunmehr auf denkbar einfache Weise möglich, den fahrzeugspezifischen Luftaustauschquerschnitt durch iteratives Verändern des Abstandes zwischen dem Luftkanal und der zugeordneten Abdeckung herauszufinden und diese Einstellung dann auf gleiche Fahrzeuge zu übertragen. Diese erfahrungsgemäß sich über einen längeren Zeitraum erstrekkende Ermittlung des geeigneten Abstandes von Abdeckung zu Luftkanal kann hierbei an einem Prototyp für das jeweilige Schienenfahrzeug vorgenommen wer-den, wobei die so ermittelte Einstellung als für alle gleichartigen Fahrzeuge gültig angesehen wird.

Hinzukommt vorteilhafterweise, daß auch bei Änderungen des Luftaustauschbedarfs während des späteren Betriebes eine derartige Anpassung durch Änderung der ursprünglichen Einstellung des Abstandes, ohne Schwierigkeiten zu bereiten, möglich ist.

Gemäß der Erfindung ist die Abdeckung vorteilhafterweise als einseitig von einer Stirnwand verschlossener Hohlzylinder ausgebildet, der den am Wagendach angeordneten Luftkanal übergreift und hierbei den Ringspalt mit dem gewünschten Abstand bildet. Dabei kann die Stirnwand eben ausgebildet sein. Sie kann aber auch halbkugelähnlich gewölbt oder kegelförmig nach innen oder außen eingeformt sein, um hierdurch den gewünschten Luftaustauschquerschnitt zu definieren.

Entsprechend einer ersten vorteilhaften Ausführungsform können an der Innenseite der Stirnwand des Hohlzylinders Befestigungsmittel vorgesehen sein, welche die mit dem Hohlzylinder strömungsdicht verbundene Stirnwand, welche gemeinsam die Abdeckung bilden, gegenüber dem Luftkanal fixieren und auf einem beliebig einstellbaren Abstand halten, wodurch zwischen dem oberen Ende des Luftkanals und der Stirnwand ein den Luftaustauschquerschnitt bestimmender Ringspalt gebildet ist. Mit anderen Worten, bei dieser ersten Ausführungsform wird die gesamte Abdeckung bei der Einstellung des Luftaustauschquerschnitts axial bewegt.

Entsprechend einer zweiten vorteilhaften Ausführungsform ist vorgesehen, daß der Hohlzylinder und die mit ihm strömungsdicht verbundene Stirnwand mittels Haltestreben ortsfest am Wagendach befestigt sind und daß an der Innenseite der Stirnwand des Hohlzylinders konzentrischer Ring mit einem konischen Rand angeordnet ist, der mit dem Luftkanal zusammenarbeitet und dessen Abstand zum Luftkanal den aktiven Strömungsquerschnitt bestimmt.

Zur eindeutigen Ausrichtung und zur Vermeidung von Versatz oder von Verkantungen des konzentrischen Rings dient vorzugsweise eine zentrale Führung, die als kreiszylindrisches Massiv- oder Hohlteil ausgebildet ist und fest mit der Stirnwand verbunden ist.

Bei dieser Ausführungsform erweist es sich als vorteilhaft, daß der Rand nicht horizontal ausgerichtet ist, sondern gemäß einer ersten Variante konisch und zwar radial nach außen zum Wagendach abfallend ausgebildet ist. Zweckmäßigerweise ist hierbei der konzentrische Ring, an welchem der konische Rand anschließt, auf dem Niveau des oberen Endes des Luftkanals oder höher angeordnet.

Gemäß einer zweiten Variante kann der Rand ebenfalls konisch, jedoch radial nach außen ansteigend, das heißt sich vom Wagendach entfernend, ausgebildet sein, wobei der konzentrische Ring, an welchem der konische Rand anschließt, auf dem Niveau des oberen Endes des Luftkanals oder tiefer angeordnet ist.

In bevorzugter Ausgestaltung der Erfindung ist die vorstehend beschriebene Abdeckung formschlüssig, vorzugsweise mittels wenigstens einer Schraubenverbindung, mit dem Luftkanal verbunden. Die Schraubenverbindung dient einerseits dazu, die Abdeckung gegenüber dem Luftkanal auf Abstand zu halten, indem die vorgesehene Schraube-Mutter(gewinde)-Verbindung mehr oder weniger ineinander geschraubt sind, das heißt, indem der Abstand zwischen Schraubenkopf einerseits und Mutter(gewinde) andererseits größer oder kleiner eingestellt ist.

Hinsichtlich der einfachen Einstellbarkeit kann die wenigstens eine Schraubenverbindung von zwei diametral gegenüberliegend oder von gegebenenfalls mehreren an der Stirnwand des Hohlzylinders angeordneten Schrauben gebildet sein, die gleichmäßig verteilt am konzentrischen Ring angreifen, wobei mittels der Betätigung der Schrauben der Abstand zwischen dem konzentrischen Ring und dem oberen Ende des Luftkanals einstellbar ist.

Hierbei kann gemäß einer weiteren Variante der Erfindung auch vorgesehen sein, daß die unmittelbar an der Stirnwand anschließenden Schrauben mit am Luftkanal befestigten Haltelaschen zusammenarbeiten, wobei mittels der Betätigung der Schrauben der Abstand zwischen der Stirnwand und dem oberen Ende des Luftkanals einstellbar ist.

An Stelle von Haltelaschen kann entsprechend einer weiteren Ausgestaltung der Erfindung aber auch vorgesehen sein, daß mittels ineinandergreifender jeweils am Luftkanal und an der Abdeckung oder an damit verbundenen Haltemitteln angeformter Verrastungen oder mittels quer zur Richtung der Abstandsveränderung anzubringender Stifte und/oder Schrauben, welche den Luftkanal und die zugeordnete Abdeckung miteinander verbinden, deren Lage relativ zueinander fixiert wird.

Ferner kann auch die kraftschlüssige beziehungsweise kraft- und formschlüssige Befestigung der Abdeckung am Luftkanal, zum Beispiel mittels eines Spannbandes, vorgesehen sein.

Generell gilt für jede erfindungsgemäß vorgesehene Befestigungsvariante, daß die Schrauben, Stifte und sonstigen Haltemittel rüttelfest vorgespannt sind, zum Beispiel mittels Federn, so daß ein unerwünschtes Lockerwerden oder zufälliges Lösen der Verbindung sicher verhindert ist.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: einen Längsschnitt durch eine erste Ausführungsform der erfindungsgemäßen Lüftungseinrichtung,
- Fig. 2: einen Längsschnitt durch eine zweite Ausführungsform der erfindungsgemäßen Lüftungseinrichtung,
- Fig. 3: einen Längsschnitt durch eine dritte Ausführungsform der erfindungsgemäßen Lüftungseinrichtung und
- Fig. 4: einen Längsschnitt durch eine vierte Ausführungsform der erfindungsgemäßen Lüftungseinrichtung.

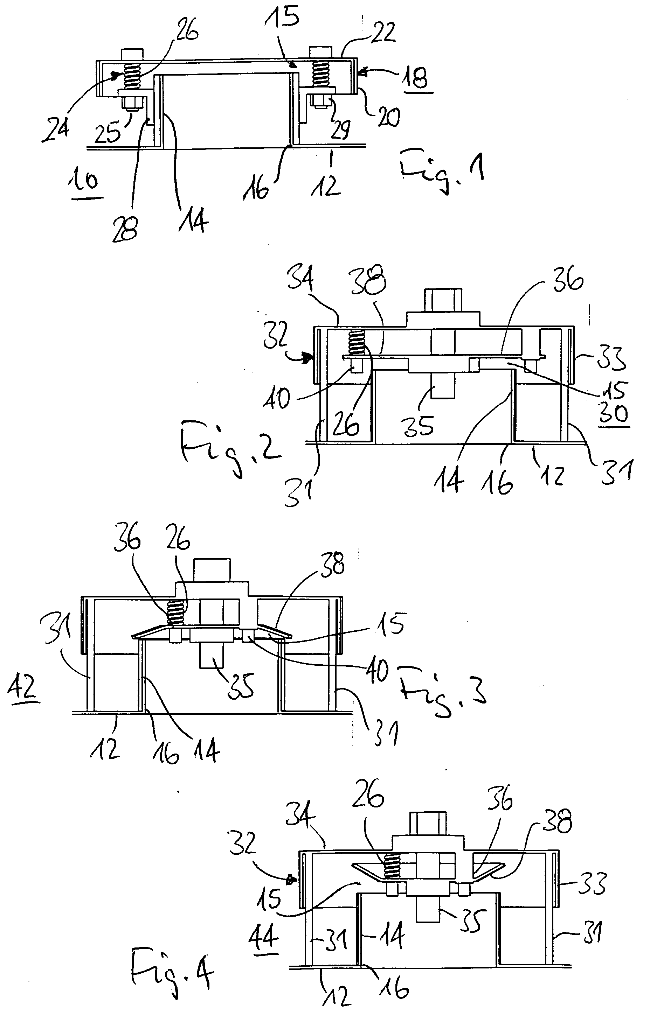

In Fig. 1 ist eine erfindungsgemäße Lüftungseinrichtung 10 in einer ersten Ausführungsform im Längsschnitt gezeigt. Gemäß dieser Ausführungsform ist an einem Wagendach 12 eines nicht näher dargestellten Schienenfahrzeuges ein Luftkanal 14 angeordnet, der als Hohlzylinder ausgebildet ist und auf eine entsprechende Ausnehmung 16 im Wagendach 12 aufgesetzt ist.

Der Luftkanal 14 hat vorzugsweise einen kreisförmigen Querschnitt und weist eine bestimmte Länge auf, um einen Kamineffekt zu gewährleisten. Er ist mit einer Abdeckung 18 versehen, welche von einem konzentrisch zum Luftkanal 14 angeordneten Hohlzylinder 20 und einer hieran strömungsdicht anschließenden Stirnwand 22 gebildet ist, deren beider Durchmesser und damit deren Querschnitt größer ist als der Durchmesser beziehungsweise Querschnitt des Luftkanals 14.

Zur Befestigung der Abdeckung 18 am Luftkanal 14 sind bei der in Fig. 1 gezeigten Ausführungsform als Schrauben-Mutter-Verbindung ausgebildete Befestigungsmittel 24 vorgesehen, welche mit einer Druckfeder 26 zusammenarbeiten, welche sowohl einerseits die Aufgabe hat, die Abdeckung 18 mit Vorspannung vom Luftkanal 14 zu entfernen als auch andererseits dazu dient, die Schrauben-Mutter-Verbindung 24 vorzuspannen und somit rüttelfest zu gestalten, um hierdurch ein zufälliges Lösen der Verbindung zu verhindern.

Während die als Schrauben-Mutter-Verbindung ausgebildeten Befestigungsmittel 24 an der Stirnwand 22 durchgesteckt sind, wobei die Schrauben 25 mit ihrem Schraubenkopf außen auf der Stirnwand aufliegen, sind am Luftkanal 14 Haltelaschen 28 vorgesehen, welche die Schäfte der durchgesteckten Schrauben 25 aufnehmen, die jeweils mit einer Mutter 29 zusammenarbeiten. Hierbei können die entsprechenden Durchgangsbohrungen der Haltelaschen 28 mit Innengewinde versehen sein, wobei zusätzlich die Muttern 29 als sogenannte Kontermuttern die Schraubensicherung bilden.

Werden die Muttern 29 der Schrauben-Mutter-Verbindung 24 angezogen, so verringert sich der Abstand zwischen der Abdeckung 18 und dem oberen Rand des Luftkanals 14 und zwischen beiden bildet sich ein Ringspalt 15, dessen Querschnitt den Luftaustauschquerschnitt definiert.

In den Fig. 2 bis 4 ist ebenfalls eine erfindungsgemäße Lüftungseinrichtung 30 in einer zweiten Ausführungsform dargestellt, die sich von der ersten Ausführungsform 10 der erfindungsgemäßen Lüftungseinrichtung maßgeblich dadurch unterscheidet, daß der am Wagendach 12 angeordnete Luftkanal 14 mit einer ähnlich gestalteten Abdeckung 32 versehen ist, die im Unterschied zu der in Fig. 1 gezeigten Variante mittels Haltestreben 31 ortsfest mit dem Wagendach verbunden ist, so daß die Außenkontur des mit der erfindungsgemäßen Lüftungseinrichtung 30 versehenen Wagendaches 12 unabhängig von der jeweiligen Einstellung des Luftaustauschquerschnitts gleichbleibt.

Die jeweilige Einstellung des Luftaustauschquerschnitts erfolgt bei dieser Ausführungsform mit Hilfe eines an der Innenseite der Abdeckung 32, die ebenfalls von einem Hohlzylinder 33 mit einer strömungsdicht hiermit verbundenen Stirnwand 34 gebildet ist, axial verstellbar angeordneten konzentrischen Rings 36, der einen Rand 38 aufweist, welcher horizontal angeordnet ist und dessen Projektion den zylindrischen Luftkanal 14 überragt.

Dieser mit Rand 38 versehene konzentrische Ring 36, der zur Begrenzung beziehungsweise Einstellung des gewünschten oder benötigten Luftaustauschquerschnitts dient, ist zu diesem Zweck mittels an der Stirnwand 34 befestigter Schraubenbolzen 40 mit der Abdeckung 32 verbunden und von einem zentral angeordneten, ebenfalls ortsfest mit der Stirnwand 34 der Abdeckung 32 verbundenen zylindrischen Massiv- oder Hohlzapfen 35 axial geführt.

Zwischengefügte Druckfedern 26 sorgen für eine Beaufschlagung des konzentrischen Ringes 36 in Richtung auf den Luftkanal 14 zu, so daß durch Verkürzen der freien Schraublänge des Schraubenbolzens 40, indem die Gewindemuttern 29 angezogen werden, der Ring 36 vom Luftkanal 14 abgehoben wird und sich der hierdurch gebildete Ringspalt 15 vergrößert. Die zentrale Führung 35 verhindert hierbei ein Verkanten oder einen Versatz des konzentrischen Rings 36.

In Fig. 3 ist eine nahezu gleiche Ausführungsform 42 der in Fig. 2 gezeigten Lüftungseinrichtung 30 dargestellt, bei welcher als einziger Unterschied der Rand 38 des konzentrischen Ringes 36 konisch abfallend ausgebildet ist, das heißt, daß sein äußerer Rand dem Wagendach 12 näher ist als sein Anschlußbereich an den Ring 36.

In Fig. 4 ist eine weitere Ausgestaltung 44 der in Fig. 2 gezeigten Ausführungsform 30 wiedergegeben, bei welcher der äußere Rand 38 des konzentrischen Rings 36 konisch ansteigend ausgebildet ist.

Die weitere Gestaltung dieser Variante 44 entspricht ebenso wie die in Fig. 3 gezeigte Ausführungsform 42 identisch der in Fig. 2 gezeigten und dort beschriebenen Ausführungsform 30.

Der Vorteil der erfindungsgemäßen Lüftungseinrichtung 10, 30, 42, 44 ist anhand der Schnittdarstellung leicht zu erkennen und nachzuvollziehen. Während bei bisherigen Lüftungseinrichtungen jeweils feste Querschnitte für den Luftaustausch vorgesehen sind, ist es hiermit erstmals möglich, den Luftaustauschquerschnitt variabel zu halten und so den jeweiligen Erfordernissen anpassen zu können.

Hierdurch ist gewährleistet, daß mit vergleichsweise wenig Aufwand für jedes Schienenfahrzeug die passende Einstellung vorgenommen werden kann.

## Patentansprüche

1. Schienenfahrzeug, insbesondere zur Personenbeförderung, mit einem Wagenkasten mit einem Wagendach (12), welches Wagendach (12) eine Einrichtung (10, 30, 42, 44) zur Entlüftung des Innenraums des Wagenkastens, einen sogenannten Dachlüfter, aufweist, der von einem mit dem Wagenkasten verbundenen Luftkanal (14) und einer im Abstand hierzu angeordneten Abdeckung (18, 32) gebildet ist, dadurch gekennzeichnet, daß der Abstand zwischen dem Luftkanal (14) des Dachlüfters (10, 30, 42, 44) und der zugeordneten Abdeckung (18, 32) einstellbar ist und daß durch Änderung des Abstands der Abdeckung (18, 32) zum Luftkanal (14) der strämungsaktive Querschnitt für den Luftaustausch veränderlich einstellbar ist,

2. Schienenfahrzeug nach Anspruch 1, dadurch gekennzeichnet, daß die zugeordnete Abdeckung (18) mittels wenigstens einer Schraubenverbindung (24) mit dem Luftkanal (24) verbunden ist.

3. Schienenfahrzeug nach Anspruch 1 oder 2, dadurch gekennzeichnet, daß die zugeordnete Abdeckung (18, 32) als einseitig von einer Stirnwand (22, 34) verschlossener Hohlzylinder (20, 33) ausgebildet ist, der den am Wagendach (12) angeordneten Luftkanal (14) übergreift und gegenüber dem Luftkanal (14) einen Ringspalt (15) begrenzt.

4. Schienenfahrzeug nach einem der Ansprüche 1 bis 3, dadurch gekennzeichnet, daß an der Innenseite der Stirnwand (34) des Hohlzylinders (33) ein konzentrischer Ring (36) mit einem Rand (38) angeordnet ist, der mit dem Luftkanal (14) zusammenarbeitet und dessen Abstand zum Luftkanal (14) den aktiven Strömungsquerschnitt des Ringspalts (15) bestimmt.

5. Schienenfahrzeug nach Anspruch 4, dadurch gekennzeichnet, daß der Rand (38) radial nach außen konisch zum Wagendach (12) abfallend ausgebildet ist.

6. Schienenfahrzeug nach Anspruch 5, dadurch gekennzeichnet, daß der konzentrische Ring (36), an welchem der Rand (38) anschließt, auf dem Niveau des oberen Endes des Luftkanals (14) oder höher angeordnet ist.

7. Schienenfahrzeug nach Anspruch 4, dadurch gekennzeichnet, daß der Rand (38) radial nach außen konisch ansteigend und sich dabei vom Wagendach (12) entfernend ausgebildet ist.

8. Schienenfahrzeug nach Anspruch 7, dadurch gekennzeichnet, daß der konzentrische Ring (36), an welchem der Rand (38) anschließt, auf dem Niveau des oberen Randes des Luftkanals (14) oder tiefer angeordnet ist.

9. Schienenfahrzeug nach einem der vorherigen Ansprüche, dadurch gekennzeichnet, daß die wenigstens eine Schraubenverbindung (24) von zwei diametral gegenüberliegend an der Stirnwand angeordneten Schrauben (25, 40) gebildet ist, die mit dem konzentrischen Ring (36) zusammenarbeiten und daß mittels der Betätigung der Schrauben (25, 40) der Abstand zwischen dem oberen Ende des Luftkanals und der Abdeckung (18, 32) einstellbar ist.

10. Schienenfahrzeug nach einem der vorherigen Ansprüche, dadurch gekennzeichnet, daß der mit einer Stirnwand (34) einseitig verschlossene Hohlzylinder (20, 33) mittels Haltestegen (31) starr mit dem Wagendach (12) verbunden ist, daß die Lage des konzentrischen Rings (36) mittels an der Stirnwand (34) angeordneter Schrauben (40) in bezug auf die Stirnwand (34) und auf das obere Ende des Luftkanals (14) entlang deren gemeinsamer Mittelachse veränderlich ist und daß durch Betätigung der Schrauben (40) der Abstand zwischen dem oberen Ende des Luftkanals (14) und dem konzentrischen Ring (36) einstellbar ist.

11. Schienenfahrzeug nach einem der Ansprüche 1 bis 9, dadurch gekennzeichnet, daß die zwei diametral gegenüberliegend unmittelbar an der Stirnwand (22) des Hohlzylinders (20) anschließenden mit am Luftkanal (14) befestigten Haltelaschen (28) zusammenarbeiten und daß durch Betätigung der Schrauben (25) der Abstand zwischen der Stirnwand (22) und dem oberen Rand des Luftkanals (14) einstellbar ist.

12. Schienenfahrzeug nach einem der vorherigen Ansprüche dadurch gekennzeichnet, daß die Schrauben (25, 40) rütteltest, zum Beispiel mittels Federn (26), vorgespannt sind.
